# EUROPÄISCHE PATENTSCHRIFT

(11) **EP 1 595 762 B1**
(45) Veröffentlichungstag und Bekanntmachung des Hinweises auf die Patenterteilung: **02.07.2008**
(21) Anmeldenummer: 04011519.8
(22) Anmeldetag: 14.05.2004
(51) Int. Cl.: B60T 1/06, F16D 55/40

(54) **Radnabe**
WHEEL HUB
MOYEU DE ROUE

(43) Veröffentlichungstag der Anmeldung: 16.11.2005
(73) Patentinhaber: NAF Neunkirchener Achsenfabrik AG, 91077 Neunkirchen (DE)
(72) Erfinder: Auer, Ernst, 81245 München (DE)
(74) Vertreter: Hofstetter, Alfons J.

(56) Entgegenhaltungen:
- DE-A- 3 832 649
- DE-A- 10 058 042
- DE-C- 19 805 881
- DE-U- 20 018 338

## Beschreibung

Die vorliegende Erfindung betrifft eine Radnabe für eine Achse eines Kraftfahrzeugs oder Lastkraftfahrzeugs, insbesondere für Achsen von Bau- und Geländefahrzeugen oder Muldenkipper gemäß den Merkmalen des Oberbegriffs des Anspruchs 1.

Derartige Radnaben sind bekannt. Insbesondere ist aus der DE 196 24 288 C1 eine Achse für einen Radbagger mit einer Lamellenbremse in der Radnabe bekannt, welche die oben genannten Merkmale aufweist. Nachteilig an der dort beschriebenen Radnabe ist jedoch, dass die verwendete Lamellenbremse nicht für höhere Geschwindigkeiten ausgelegt ist. Dies führt bei Radbaggern zu keinem Problem, da diese sich nur mit sehr geringen Geschwindigkeiten bewegen. Bei höheren Geschwindigkeiten ist jedoch ein höheres Bremsmoment gefordert. Dies kann bei Lamellenbremsen nur durch eine höhere Anzahl an Lamellen erreicht werden. Je höher die Anzahl der Lamellen jedoch ist, desto höher sind auch die insbesondere im Leerlauf bzw. im nicht-gebremsten Zustand entstehenden Temperaturen innerhalb der Lamellenbremse bzw. der die Lamellenbremse umgebenden Kühlflüssigkeit. Dieses Problem wurde bisher nur unzulänglich gelöst. Aus der DE 200 18 338 U, nach dem Oberbegriff ist ferner eine Bremsvorrichtung für Kraftfahrzeuge oder Lastkraftfahrzeuge mit einer die eingangs genannten Merkmale aufweisenden Lamellenbremse bekannt. Dabei bilden die Innenlamellen den feststehenden Teil und die Außenlamellen den sich drehenden Teil der Lamellenbremse, wobei die Innenlamellen und eine erste Aktuatorscheibe drehfest und axial verschiebbar über ein Abstützelement mit einer feststehenden Innennabe verbunden sind und die Außenlamellen drehfest und axial verschiebbar mit der radial außenliegenden, sich drehenden Außennabe verbunden sind, wobei eine zweite Aktuatorscheibe, die mit der ersten Aktuatorscheibe in Wirkverbindung steht, als Bremskolben für die Lamellenbremse ausgebildet ist. Aus der DE 100 58 042 A1 ist schließlich ein Radantrieb für eine Arbeitsmaschine mit einer integrierten durch einen hydraulischen Kolben betätigbaren Lamellenbremse, die mit einer automatischen Kolbennachstelleinheit versehen ist, bekannt. Die Lamellenbremse befindet sich innerhalb einer Radnabe mit einem integrierten Planetengebtriebe einer Fahrzeugachse. Außenlamellen bilden den sich drehenden Teil der Lamellenbremse und sind über die Nabe mit einem Rad der Arbeitsmaschine verbunden. Innenlamellen bilden den feststehenden Teil der Lamellenbremse und sind fest über das Gelenkgehäuse bzw. den Nabenträger mit einem Achskörper der Arbeitsmaschine verbunden. Die Nabe ist an der dem Planetengetriebe abgewandten Seite der Lamellenbremse über Kegelrollenlager gegenüber dem Nabenträger abgestützt, wobei jeweils zwei Kegelrollenlager in axialer Richtung beabstandet angeordnet sind. Die Nabe weist außerdem an ihrem dem Planetengetriebe abgewandten Ende einen teilweise umlaufenden nach außen abstehenden Kragen auf, wobei im Bereich des Kragens Öffnungen zur Aufnahme von Bolzen vorgesehen sind.

Es ist daher Aufgabe der vorliegenden Erfindung, eine Radnabe mit einer Lamellenbremse der eingangs genannten Art bereitzustellen, bei der die Lamellenbremse insbesondere im Leerlauf bzw. im nicht-gebremsten Zustand nur sehr wenig Temperatur entwickelt.

Gelöst wird diese Aufgabe durch eine Radnabe mit den Merkmalen des unabhängigen Anspruchs 1. Vorteilhafte Ausgestaltungen sind in den jeweiligen Unteransprüchen beschrieben.

Bei einer erfindungsgemäßen Radnabe für eine Achse eines Kraftfahrzeugs oder Lastkraftfahrzeugs, insbesondere für Achsen von Bau- und Geländefahrzeugen oder Muldenkippem besteht die verwendete Lamellenbremse aus mehreren scheibenförmigen Außenlamellen und entsprechenden scheibenförmigen Innenlamellen sowie einer Außennabe und einem Bremsgehäuse, die zusammen ein gekapseltes Gehäuse mit einem Raum für die Lamellenbremse ausbilden, wobei das gekapselte Gehäuse im Inneren derart ausgebildet ist, dass eine Zirkulation einer sich darin befindlichen Kühlflüssigkeit im Raum erfolgt. bilden die Innenlamellen den feststehenden Teil und die Außenlamellen den sich drehenden Teil der Lamellenbremse, wobei die Innenlamellen drehfest und axial verschiebbar über ein Abstützelement mit einer feststehenden Innennabe verbunden sind und die Außenlamellen drehfest und axial verschiebbar mit der radial außenliegenden, sich drehenden Außennabe verbunden sind. Die Außenlamellen weisen dabei radial außenliegende Ausnehmungen auf, die in mehrere, zwischen Außennabe und dem Bremsgehäuse axial befestigte Bolzen eingreifen. Des Weiteren ist ein Freiraum zwischen den Außenlamellen und der Innenseite der Außennabe zur Zirkulation der Kühlflüssigkeit ausgebildet. Zwischen einer Innenseite des Bremsgehäuses und einer dem Bremsgehäuse gegenüberliegenden Innenlamelle ist ein Verteilraum für die Kühlflüssigkeit ausgebildet, wobei der Verteilraum flüssigkeitsleitend mit dem Freiraum zwischen den Außenlamellen und der Innenseite der Außennabe zur Zirkulation der Kühlflüssigkeit zwischen den Lamellen, dem Verteilraum und dem Freiraum verbunden ist und die Außennabe einen zumindest teilweise umlaufenden, nach außen von der Außennabe abstehenden Kragen aufweist, wobei im Bereich des Kragens mehrere Öffnungen zur Aufnahme von jeweils einem Radbolzen zur Verbindung der Außennabe mit einer Felge eines Rades ausgebildet sind und die Öffnungen außerhalb des Raums für die Lamellenbremse angeordnet sind. Durch diese erfindungsgemäße Konstruktion ist es möglich, den zur Verfügung stehenden Raum für die Lamellenbremse signifikant zu vergrößern. Insbesondere ragen die Radbolzen, wie dies im Stand der Technik der Fall ist, nicht mehr ins Nabengehäuse, sondern liegen außerhalb des Nabengehäuses. Durch die Vergrößerung dieses Freiraums wird eine verbesserte Zirkulation der sich in dem Raum befindlichen Kühlflüssigkeit, insbesondere Öl, erzielt. Im Vergleich zu den bisher bekannten Lamellenbremsen ergibt sich eine Temperaturemiedrigung von ca. 10 bis 25 °C im Leerlaufbetrieb bzw. nicht-gebremsten Zustand. Durch diese niedrigen Leerlauftemperaturen ist es zudem nicht mehr notwendig, eine Zusatzkühlung für die Lamellenbremse bereitzustellen. Im Vergleich zu herkömmlichen Scheibenbremsen ist die Lamellenbremse weitgehend wartungsfrei, da kein Verschleiß auftritt. Insbesondere entsteht kein Bremsstaub. Des Weiteren ist die Lamellenbremse in der Kühlflüssigkeit, insbesondere Öl, geführt. Da die spezifische Wärmeaufnahme des Öls mehrfach höher ist wie bei Eisen, ergibt sich bei gleichem Gewicht, im Vergleich zu einer bekannten Scheibenbremse aus Eisen, eine deutlich höhere Wärmekapazität. Dadurch kann die erfindungsgemäße Radnabe insgesamt kleiner und leichter ausgestaltet werden.

In einer weiteren vorteilhaften Ausgestaltung der Erfindung ist es möglich, dass zwischen den Innenlamellen und der Innenseite des Bremsgehäuses peripher schaufelartige Vorrichtungen ausgebildet sind, wobei die Kühlflüssigkeit durch die Drehung der schaufelartigen Vorrichtungen nach außen in den Verteilerraum gedrückt wird und zwischen den Außen- und Innenlamellen wieder zurückfließt. Eine derartige Ausgestaltung des Inneren des Bremsgehäuses gewährleistet eine kontinuierliche Zirkulation der Kühlflüssigkeit durch und über alle wärmeentwickelnden Elemente und einen entsprechenden Wärmeabtrag.

In einer weiteren vorteilhaften Ausgestaltung der erfindungsgemäßen Radnabe sind die Innenlamellen und/oder die Außenlamellen einseitig und/oder beidseitig mit Rillen versehen. Dadurch ist gewährleistet, dass Turbulenzen der zwischen den Außen- und Innenlamellen fließenden Kühlflüssigkeit weitestgehend vermieden werden. Es verringert sich die Reibung zwischen den Lamellenscheiben, die Wärmeentwicklung wird bei nicht-betätigter Bremse weiter erniedrigt. Dabei können nur die feststehenden Innenlamellen mit einem bremsfördernden Belag versehen sein. Es hat sich herausgestellt, dass eine derartige Ausgestaltung der Innenlamellen ebenfalls vorteilhaft auf die Wärmeentwicklung innerhalb der Lamellenbremse ist. Insbesondere wurde festgestellt, dass die Außenlamellen, wenn diese ebenfalls mit einem bremsfördernden Belag versehen sind, ein relativ großes Volumen an Kühlflüssigkeit bzw. Öl mitnehmen, wodurch bei hohen Geschwindigkeiten hohe Reibungskräfte und damit eine sehr große Wärmeentwicklung erfolgt. Bei bisherigen Radnaben mit integrierter Lamellenbremse entstand dieses Problem nicht, da die entsprechenden Radbagger Höchstgeschwindigkeiten von lediglich bis zu 20 km/h bei 100 U/min aufweisen. Bei höheren Geschwindigkeiten, wie z. B. bei 50 km/h entstehen bereits 180 U/min.

In einer weiteren vorteilhaften Ausgestaltung der Erfindung bewegt ein druckbeaufschlagter Kolben ein auf eine erste Innenlamelle wirkender Bremsteller, wobei in dem Kolben ein Federpacket angeordnet ist, die sich einerseits an einer Innenseite des Kolbens und andererseits an einer an der Innennabe abgestützten Anlaufscheibe abstützt, so dass bei Druckbeaufschlagung des Kolbens sich das Federpacket spannt und bei nachlassendem Druck sich entspannt. Zudem kann der Bremsteller mit einem Bremszylinder über eine Zugfeder verbunden sein. Dadurch ist eine sichere Kolbenrückführung gewährleistet.

Weitere Einzelheiten, Merkmale und Vorteile der Erfindung ergeben sich aus der nachfolgenden Beschreibung eines in den Figuren schematisch dargestellten Ausführungsbeispiels. Es zeigen
- Figur 1: eine Schnittansicht der erfindungsgemäßen Radnabe; und
- Figur 2: eine Aufsicht auf einen Teilbereich der erfindungsgemäßen Radnabe.

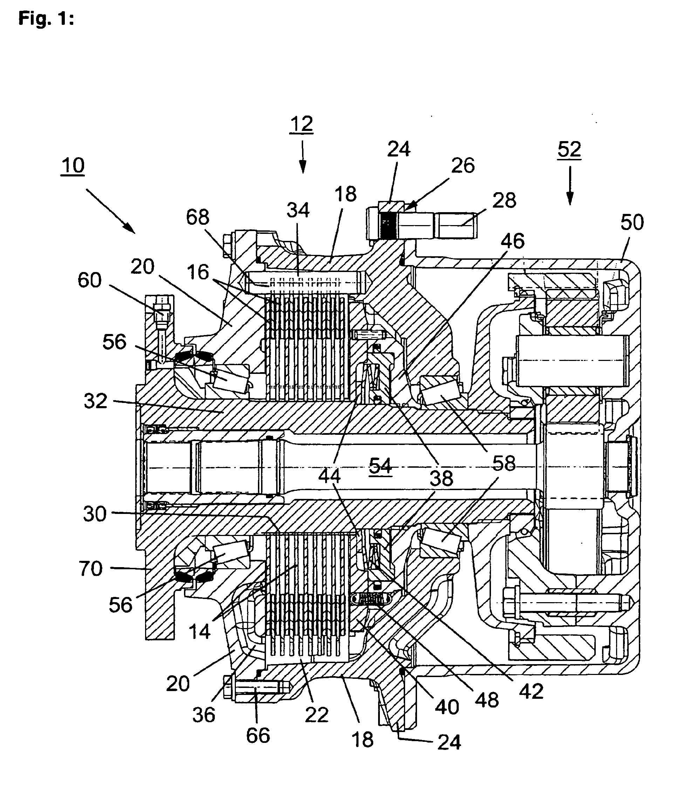

Figur 1 zeigt eine Schnittansicht einer Ausführungsform der Radnabe 10. Die Radnabe 10 ist dabei insbesondere für eine Achse eines Kraftfahrzeugs oder Lastkraftfahrzeugs, wie z. B. für Achsen von Bau- und Geländefahrzeugen oder Muldenkippern, geeignet. Ein Drehmoment für ein an der Achse angeordnete Rad (nicht dargestellt) wird über eine innenliegende Welle 54 in einer feststehenden Innennabe 32 zugeführt. An einem der Antriebsanordnung gegenüberliegenden Ende ist die Welle 54 mit einem Planetengetriebe 52 in Wirkverbindung. Man erkennt, dass sich eine Außennabe 18 auf der feststehenden Innennabe 14 über Kegelrollenlager 56, 58 abstützt. Die Außennabe 18 ist mit einem Bremsgehäuse 20 verbunden und bildet mit diesem ein gekapseltes Gehäuse mit einem Raum 22 für eine Lamellenbremse. Das gekapselte Gehäuse ist dabei im Inneren derart ausgebildet, dass eine Zirkulation einer sich darin befindlichen Kühlflüssigkeit, insbesondere Öl, im Raum 22 erfolgt. Die Lamellenbremse 12 besteht aus mehreren scheibenförmigen Außenlamellen 16 und entsprechenden scheibenförmigen Innenlamellen 14. Die Innenlamellen 14 bilden dabei den feststehenden Teil und die Außenlamellen 16 den sich drehenden Teil der Lamellenbremse 12, wobei die Innenlamellen 14 drehfest und axial verschiebbar über ein Abstützelement 30 auf der feststehenden Innennabe 32 verbunden sind. Die Außenlamellen 16 sind drehfest und axial verschiebbar mit radial außenliegenden, sich drehenden Außennaben 18 verbunden, wobei die Außenlamellen 16 radial außenliegende Ausnehmungen 68 aufweisen, die in mehrere, zwischen Außennabe 18 und dem Bremsgehäuse 20 axial befestigte Bolzen 34 eingreifen.

Des Weiteren erkennt man, dass für die Kühlflüssigkeitszirkulation zwischen einer Innenseite des Bremsgehäuses 20 und den Bolzen 34 ein Verteilraum 36 ausgebildet ist. Zwischen den Innenlamellen 14 und der Innenseite des Bremsgehäuses 20 sind peripher schaufelartige Vorrichtungen ausgebildet, wobei die Kühlflüssigkeit durch die Drehung der schaufelartigen Vorrichtungen nach außen über den Verteilraum 36 in den Raum 22 gedrückt wird und zwischen den Außen- und Innenlamellen 14, 16 wieder zurückfließt. In dem dargestellten Ausführungsbeispiel sind die Innenlamellen 14 beidseitig mit Rillen versehen. Des Weiteren weisen die feststehenden Innenlamellen 14 zumindest teilweise einen bremsfördernden Belag auf.

Die Lamellenbremse 12 wird über einen druckbeaufschlagten Kolben betätigt. Dabei bewegt der druckbeaufschlagte Kolben 38 ein auf eine erste Innenlamelle 14 wirkender Bremsteller 40, wobei in dem Kolben 38 ein Federpacket 42 angeordnet ist. Das Federpacket 42 stützt sich einerseits an einer Innenseite des Kolbens 38 und andererseits an einer an der Innennabe 32 abgestützten Anlaufscheibe 44 ab. Bei Druckbeaufschlagung des Kolbens 38 spannt sich das Federpacket 42, bei nachlassendem Druck entspannt es sich. In dem dargestellten Ausführungsbeispiel ist das Federpacket 42 als Tellerfeder ausgebildet. Des Weiteren erkennt man, dass der Bremsteller 40 mit einem Bremszylinder 46 über eine Zugfeder 48 verbunden ist.

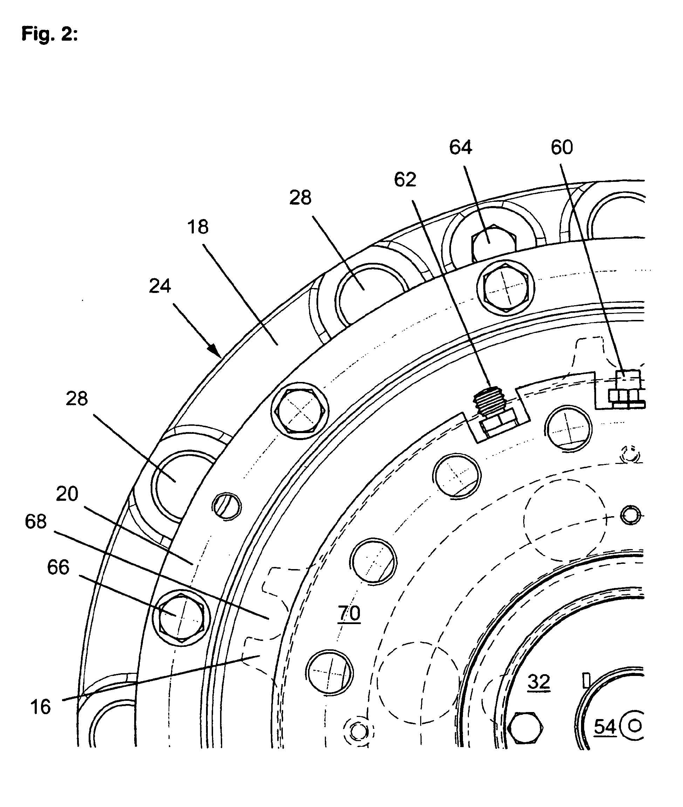

Die Außennabe 18 weist zudem einen umlaufenden, nach außen von der Außennabe 18 abstehenden Kragen 24 auf. Dabei sind im Bereich des Kragens 24 mehrere Öffnungen 26 zur Aufnahme von jeweils einem Radbolzen 28 zur Verbindung der Außennabe 18 mit einer Felge des Rades (nicht dargestellt) ausgebildet. Zudem ist die Außennabe 18 über mehrere Verbindungselemente 64 mit einem Trabantenkorb 50 verbunden (vergleiche auch Figur 2). Mit dem Bremsgehäuse 20 ist die Außennabe 18 über mehrere Verbindungselemente 66 dichtend verbunden. Die Radnabe 10 weist zudem ein Entlüftungsventil 60 für den Raum des Planetentrieb 52 und den Raum für die Lamellenbremse 12 auf.

Figur 2 zeigt eine Aufsicht auf einen Teilbereich der Radnabe 10. Man erkennt den umlaufenden, nach außen von der Außennabe 18 abstehenden Kragen 24. Der Kragen 24 nimmt dabei die Radbolzen 28 zur Verbindung der Außennabe 18 mit einer Felge des Rades auf. Über die Verbindungselemente 66 ist das Bremsgehäuse 20 mit der Außennabe 18 verbunden. Des Weiteren erkennt man schematisch dargestellt die Lage der Außenlamellen 16 mit der jeweils außenliegenden Ausnehmung 68 zur Aufnahme der Bolzen 34. Neben dem Entlüfter 60 für den Planetentrieb 52 weist die Radnabe 10 zudem ein Entlüfterventil 62 für den Kolben der Lamellenbremse 12 auf.

## Patentansprüche

1. Radnabe für eine Achse eines Kraftfahrzeugs oder Lastkraftfahrzeugs, insbesondere für Achsen von Bau- und Geländefahrzeugen oder Muldenkipper, mit einer Lamellenbremse (12) bestehend aus mehreren scheibenförmigen Außenlamellen (16) und entsprechenden scheibenförmigen Innenlamellen (14) sowie einer Außennabe (18) und einem Bremsgehäuse (20), die ein gekapseltes Gehäuse mit einem Raum (22) für die Lamellenbremse (12) ausbilden, wobei das gekapselte Gehäuse im Inneren derart ausgebildet ist, dass eine Zirkulation einer sich darin befindlichen Kühlflüssigkeit im Raum (22) erfolgt und die Innenlamellen (14) den feststehenden Teil und die Außenlamellen (16) den sich drehenden Teil der Lamellenbremse (12) ausbilden, wobei die Innenlamellen (14) drehfest und axial verschiebbar über ein Abstützelement (30) mit einer feststehenden Innennabe (32) verbunden sind und die Außenlamellen (16) drehfest und axial verschiebbar mit der radial außenliegenden, sich drehenden Außennabe (18) verbunden sind, wobei die Außenlamellen (16) radial außenliegende Ausnehmungen (68) aufweisen, die in mehrere, zwischen Außennabe (18) und dem Bremsgehäuse (20) axial befestigte Bolzen (34) eingreifen **dadurch gekennzeichnet, dass** ein Freiraum zwischen den Außenlamellen (16) und der Innenseite der Außennabe (18) zur Zirkulation der Kühlflüssigkeit ausgebildet ist, und
dass zwischen einer Innenseite des Bremsgehäuses (20) und einer dem Bremsgehäuse (20) gegenüberliegenden Innenlamelle (14) ein Verteilraum (36) für die Kühlflüssigkeit ausgebildet ist, wobei der Verteilraum (36) flüssigkeitsleitend mit dem Freiraum zwischen den Außenlamellen (16) und der Innenseite der Außennabe (18) zur Zirkulation der Kühlflüssigkeit zwischen den Lamellen, den Verteilraum und den Freiraum Freiraum verbunden ist und die Außennabe (18) einen zumindest teilweise umlaufenden, nach außen von der Außennabe (18) abstehenden Kragen (24) aufweist, wobei im Bereich des Kragens (24) mehrere Öffnungen (26) zur Aufnahme von jeweils einem Radbolzen (28) zur Verbindung der Außennabe (18) mit einer Felge eines Rades ausgebildet sind und die Öffnungen (26) außerhalb des Raums (22) für die Lamellenbremse (12) angeordnet sind.

2. Radnabe nach Anspruch 1,
**dadurch gekennzeichnet,**
**dass** zwischen den Innenlamellen (14) und der Innenseite des Bremsgehäuses (20) peripher schaufelartige Vorrichtungen ausgebildet sind, wobei die Kühlflüssigkeit durch die Drehung der schaufelartigen Vorrichtungen nach außen über den Verteilraum (36) in den Raum (22) gedrückt wird und zwischen den Außen- und Innenlamellen (14, 16) wieder zurückfließt.

3. Radnabe nach Anspruch 1 oder 2,
**dadurch gekennzeichnet,**
**dass** die Innenlamellen (14) und/oder die Außenlamellen (16) einseitig und/oder beidseitig zumindest teilweise mit Rillen versehen sind.

4. Radnabe nach einem der vorhergehenden Ansprüche,
**dadurch gekennzeichnet,**
**dass** ein druckbeaufschlagter Kolben (38) einen auf eine erste Innenlamelle (14) wirkenden Bremsteller (40) bewegt, wobei im Kolben (38) ein Federpacket (42) angeordnet ist, das sich einerseits an einer Innenseite des Kolbens (38) und andererseits an einer an der Innennabe (32) abgestützten Anlaufscheibe (44) abstützt, so dass sich das Federpacket bei Druckbeaufschlagung des Kolbens spannt und bei nachlassendem Druck entspannt.

## Claims

1. Wheel hub for an axle of a motor vehicle or truck, especially for axles of construction-site trucks and off-road vehicles or tipping trucks, including a multi-disk brake (12) consisting of plural disk-shaped outer plates (16) and corresponding disk-shaped inner plates (14) as well as an outer hub (18) and a brake housing (20) which form an encapsulated housing with a space (22) for the multi-disk brake (12), wherein the encapsulated housing is formed in the interior such that circulation of a cooling fluid located therein occurs in the space (22) and the inner plates (14) constitute the fixed portion and the outer plates (16) constitute the rotating portion of the multi-disk brake (12), wherein the inner plates (14) are connected to a fixed inner hub (32) via a supporting member (30) in rotationally fixed and axially displaceable manner, and the outer plates (16) are connected to the radially outward, rotating outer hub (18) in rotationally fixed and axially displaceable manner, wherein the outer plates (16) have radially outward recesses (68) engaging with plural bolts (34) axially attached between outer hub (18) and brake housing (20),
**characterized in that**
a clearance is formed between the outer plates (16) and the inner side of the outer hub (18) for circulation of the cooling fluid, and that
a distribution space (36) for the cooling fluid is formed between an inner side of the brake housing (20) and an inner plate (14) disposed opposite the brake housing (20), wherein the distribution space (36) is in fluid communication with the clearance between the outer plates (16) and the inner side of the outer hub (18) for circulation of the cooling fluid between the plates, the distribution space and the clearance, and the outer hub (18) has an at least partially surrounding collar (24) projecting outwardly of the outer hub (18), wherein plural openings (26) each for receiving a wheel bolt (28) for connecting the outer hub (18) to a rim of a wheel are formed in the region of the collar (24) and the openings (26) are arranged outside of the space (22) for the multi-disk brake (12).

2. Wheel hub according to claim 1,
**characterized in that**
blade-like devices are peripherally formed between the inner plates (14) and the inner side of the brake housing (20), wherein the cooling fluid is pressed outwardly into the space (22) via the distribution space (36) by the rotation of the blade-like devices and flows back again between the outer and inner plates (14, 16).

3. Wheel hub according to claims 1 or 2,
**characterized in that**
the inner plates (14) and/or the outer plates (16) are at least partially provided with grooves on one side and/or both sides.

4. Wheel hub according to any one of the preceding claims,
**characterized in that**
a pressurized piston (38) moves a brake plate (40) acting on a first inner plate (14), wherein a spring pack (42) is disposed in the piston (38), which supports itself on an inner side of the piston (38) on the one hand and on a thrust plate (44) supported on the inner hub (32) on the other hand, such that the spring pack tensions upon pressurization of the piston and releases the tension upon pressure release.

## Revendications

1. Moyeu de roue pour un axe d'un véhicule automobile ou d'un camion, en particulier pour les axes de véhicules de chantier et tous terrains ou de camions bennes, avec un frein à disques multiples (12) se composant de plusieurs lamelles extérieures en forme de disque (16) et de lamelles intérieures en forme de disque (14) correspondantes, ainsi que d'un moyeu extérieur (18) et d'un carter de frein (20), qui forment un carter étanche avec un espace (22) pour le frein à disques multiples (12), le carter étanche étant formé à l'intérieur de sorte qu'il s'effectue dans l'espace (22) une circulation d'un liquide de refroidissement qui se trouve à l'intérieur et que les lamelles intérieures (14) forment la partie fixe et les lamelles extérieures (16) la partie rotative du frein à disques multiples (12), les lamelles intérieures (14), solidaires en rotation et axialement mobiles, étant reliées à un moyeu intérieur fixe (32) par l'intermédiaire d'un élément d'appui (30) et les lamelles extérieures (16), solidaires en rotation et axialement mobiles, étant reliées au moyeu extérieur s'étendant radialement à l'extérieur, rotatif (18), les lamelles extérieures (16) présentant des creux s'étendant radialement à l'extérieur (68), qui se mettent en prise dans plusieurs axes (34), fixés de manière axiale entre le moyeu extérieur (18) et le carter de frein (20),
**caractérisé en ce**
**qu'**un espace libre est formé entre les lamelles extérieures (16) et la face intérieur du moyeu extérieur (18) pour la circulation du liquide de refroidissement et
**qu'**un espace de distribution (36) pour le liquide de refroidissement est formé entre une face intérieure du carter de frein (20) et une lamelle intérieure (14) faisant face au carter de frein (20), l'espace de distribution (36) étant relié, de manière à guider le liquide, à l'espace libre entre les lamelles extérieures (16) et la face intérieure du moyeu extérieur (18) pour la circulation du liquide de refroidissement entre les lamelles, l'espace de distribution et l'espace libre et le moyeu extérieur (18) présentant un rebord (24) au moins partiellement périphérique, s'éloignant du moyeu extérieur (18) vers l'extérieur, plusieurs ouvertures (26) étant formées dans la région du rebord (24) pour le logement respectivement d'un boulon de moyeu (28) pour relier le moyeu extérieur (18) à une jante d'une roue et les ouvertures (26) étant disposées à l'extérieur de l'espace (22) pour le frein à disques multiples (12).

2. Moyeu de roue selon la revendication 1,
**caractérisé en ce**
**que** des mécanismes sont formés à la périphérie à la manière d'une pale entre les lamelles intérieures (14) et la face intérieure du carter de frein (20), le liquide de refroidissement étant poussé vers l'extérieur par le biais de la rotation des mécanismes à la manière d'une pale, par l'intermédiaire de l'espace de distribution (36), dans l'espace (22) et refluant entre les lamelles extérieures et intérieures (14, 16).

3. Moyeu de roue selon la revendication 1 ou 2,
**caractérisé en ce**
**que** les lamelles intérieures (14) et/ou les lamelles extérieures (16) sont pourvues d'un côté et/ou des deux côtés au moins partiellement de rainures.

4. Moyeu de roue selon l'une des revendications précédentes,
**caractérisé en ce**
**qu'**un piston soumis à la pression (38) déplace une plaquette de frein (40) agissant sur une première lamelle intérieure (14), un bloc ressort (42) étant disposé dans le piston (38), qui s'appuie d'un côté sur une face intérieure du piston (38) et de l'autre côté sur une disque de démarrage (44), appuyée sur le moyeu intérieur (32), de sorte que le bloc ressort se tend en cas de soumission du piston à la pression et se détend lorsque la pression se relâche.
